# EUROPÄISCHE PATENTSCHRIFT

(11) **EP 0 728 571 B1**
(45) Veröffentlichungstag und Bekanntmachung des Hinweises auf die Patenterteilung: **11.10.2000**
(21) Anmeldenummer: 95102803.4
(22) Anmeldetag: 27.02.1995
(51) Int. Cl.: B29C 70/06, B29K 505/12

(54) **Verfahren zur Erzeugung niederohmiger Kontaktflächen an Bauteilen aus langstahlfasergefüllten Thermoplasten**
Method for creating low ohmic contact areas on thermoplastic articles filled with long steel fibres
Procédé pour la création des surfaces de contact en résistance ohmique basse sur pièces thermoplastiques chargées de fibres longues en acier

(43) Veröffentlichungstag der Anmeldung: 28.08.1996
(73) Patentinhaber: INPRO INNOVATIONSGESELLSCHAFT FÜR FORTGESCHRITTENE PRODUKTIONSSYSTEME IN DER FAHRZEUGINDUSTRIE MBH, 10787 Berlin (DE)
(72) Erfinder: Ullmann, Falk, Dr., c/o INPRO INNOVATIONSGES. FÜR, Hallerstrasse 1 D-10587 Berlin (DE); Jansen, Martin, c/o INPRO INNOVATIONSGES. FÜR, Hallerstrasse 1 D-10587 Berlin (DE); Möllhoff, Olaf, c/o INPRO INNOVATIONSGES. FÜR, Hallerstrasse 1 D-10587 Berlin (DE); Wesselmann, Ludger, c/o INPRO INNOVATIONSGES. FÜR, Hallerstrasse 1, 10587 Berlin (DE); Pfeiffer, Bernhard, Dr., 65779 Kelkheim (DE)
(74) Vertreter: Hoffmann, Klaus-Dieter, Dipl.-Ing.

(56) Entgegenhaltungen:
- EP-A- 0 609 942
- WO-A-91/14249
- DE-A- 2 649 267

## Beschreibung

Die Erfindung betrifft ein Verfahren zur Erzeugung niederohmiger Kontaktflächen an eine faserarme Randschicht aufweisenden, im Spritzgußverfahren hergestellten Bauteile aus fasergefühlten Thermoplasten.

Aus der DE-A-26 49 267 ist ein Verfahren zur Erzeugung niederohmiger Kontaktflächen an eine Randschicht aufweisenden, im Spritzgußverfahren hergestellten Bauteilen aus langmetallfasergefüllten Thermoplasten bekannt gemäß dem einleitenden Teil des Anspruchs 1, bei dem die Oberflächenschicht der Bauteile durch Aufrauen im Spritzgußwerkzeug entfernt wird, so daß eine sich sonst bildende Verarmung der Außenschicht an Metallteilen vermieden wird.

Aus der EP-A-0-609 942 ist weiterhin ein Verfahren bekannt, bei dem Formteile aus Kunststoff mit eingelagerten, elektrisch leitfähigen Füllstoffen, z.B. zur Fertigung von abgeschirmten Gehäusen für die elektrische Nachrichtentechnik an Verbindungsstellen mit gleichartigen Formteilen oder elektrisch leitenden Bauteilen so gestaltet werden, daß nach Entfernen von Teilbereichen der Formteile oder von extra angeformten Ansätzen die elektrisch leitenden Füllstoffe freiliegen.

Der wechselseitige Einfluß elektronischer Komponenten und Geräte, hervorgerufen durch Störungen im Netz bzw. elektromagnetische Strahlung, muß für einen störungsfreien Betrieb unterdrückt werden. Aktuelle Normen, beispielsweise in Deutschland die VDE-Norm 0870 und die europaweit gültigen EN-Normen, regeln die maximal zulässige austretende Strahlungsmenge.

Die elektromagnetische Strahlungsemission kann deutlich gesenkt werden, wenn das Gehäuse aus leitfähigen Werkstoffen besteht. Es ist bekannt (WO-A-91 14249), die elektrische Leitfähigkeit von Kunststoffprodukten durch Zugabe von Langstahlfasern in die plastische oder flüssige Kunststoffmischung bei der Herstellung der Kunststoffprodukte zufriedenstellend zu erreichen.

Günstig bei der Spritzgußverarbeitung ist das verhältnismäßig hohe Potential zur Funktionsintegration. Z.B können Schnittstellen für Zuleitungen im Gehäuse integriert und Verbindungsteile zum Fügen der Gehäuseteile (Klips- oder Schnappverbindungen) beim Spritzgießen in einem Schuß gefertigt werden. Zusätzliche Montageschritte können dann entfallen.

Durch das Einbringen längerer Stahlfasern in eine Thermoplastmatrix mit einem Stahlfasergehalt von 10 Gew.-% (1,4 Vol.-%) kann der Durchgangswiderstand im Kern des Materials von 10¹⁰⁻¹⁴ auf unter 0,2 Ωcm eingestellt werden. Bei der Spritzgußverarbeitung bildet sich an der Gehäuseoberfläche eine stahlfaserarme Schicht, die eine geringere Leitfähigkeit aufweist als der Kern des Materials. Diese Schicht entsteht durch eine Faserverarmung an der Fließfront während des Formfüllvorganges ("Faserorientierung beim Verarbeiten kurzfaserverstärkter Thermoplaste" von Dipl.-Ing. R. P. Hegler, Kunststoffe 74/1984, 5, Seiten 271 - 277). Zur Gewährleistung der elektromagnetischen Verträglichkeit ist jedoch sowohl ein geringer elektrischer Übergangswiderstand zu leitfähigen Kontaktpartnern unter 0,5 Ω als auch die Abdichtung gegen hochfrequente elektromagnetische Wellen entlang der Fuge zwischen Gehäuseteilen erforderlich. Eine kostengünstige, großseriengeeignete Kontaktier- und Fügetechnik unter Berücksichtigung der notwendigen hochfequenzdichten Verbindung zwischen im Spritzgußverfahren hergestellten Gehäusebauteilen ist derzeit noch nicht entwickelt.

Zur Überbrückung der schlecht leitenden Randschicht an den Gehäuseoberflächen werden bislang selbstschneidende Schrauben eingedreht oder leitfähige Dichtungen eingelegt oder ein leitfähiger Kleber beim Fügen aufgetragen.

Diese bekannten Maßnahmen sind insofern nachteilig, daß ein zusätzlicher Fertigungsschritt nach der Umformung zu Bauteilen notwendig ist.

Der Erfindung liegt die Aufgabe zugrunde, ein Verfahren der eingangs erwähnten Art zur Verfügung zu stellen, daß auf einfache, kostengünstige Weise eine großseriengeeignete Kontaktier- und/oder Fügetechnik von im Spritzgußverfahren hergestellten Bauteilen, insbesondere Gehäusebauteilen unter Berücksichtigung der notwendigen hochfrequenzdichten Verbindung zwischen diesen Bauteilen gewährleistet. Insbesondere soll für den Kontakt der Bauteile nach außen (z.B. Erdung) gesorgt werden.

Diese Aufgabe wird erfindungsgemäß dadurch gelöst, daß Langstahlfasern als Fasern benutzt werden, beim Spritzgießen der Bauteile diese mit Oberflächenstrukturen versehen werden, die leicht abtragbar sind, und daß die faserarme Randschicht gezielt unter Bildung der Kontaktflächen entfernt wird und an letzteren dabei lokal leifähige Oberflächenbereiche geschaffen werden.

Vorteilhafte Weiterbildungen des erfindungsgemäßen Verfahrens ergeben sich aus den Patentansprüchen 2 bis 11.

Vorzugsweise wird die faserarme Randschicht beim Entformen der Bauteile noch während des Spritzgußprozesses, bei einer Nachbehandlung der Bauteile oder beim Fügen der im Spritzguß hergestellten Bauteile durch einen konstruktiv modifizierten Fügepartner entfernt. Die leicht abtragbaren Oberflächenstrukturen können von Noppen gebildet werden, die mit Bruchkerben versehen werden.

Vorzugsweise werden mindestens zwei Formteile mit verlorenem Volumen wie z.B. Gehäusehälften beim Spritzgießen an definierten Stellen im Spritzgußwerkzeug verbunden und dann beim Entformen getrennt. Das Fügen der vorgefertigten Formteile und das dabei gezielte Entfernen der faserarmen Randschicht durch Zusammenpressen der Formteile kann mittels Druck erfolgen. Auch kann das Fügen mittels lösbaren Schnapp- und/oder Klipsverbindungen durchgeführt werden. Zur Steigerung der Kontaktierung können bei Bedarf die vorbereiteten Formteile beim Fügen zusätzlich durch herkömmliches Einlegen einer leitfähigen Dichtung oder Verkleben mit leifähigem Kleber verbunden werden.

Vorzugsweise wird mindestens eine mit einer außerhalb der Gehäuseteile befindlichen Erdung verbindbare Kontaktfläche geschaffen.

Das erfindungsgemäße Verfahren gewährleistet vorteilhafterweise gefügte Formteile in der Form von Gehäusen, die auch an der Fuge dicht gegen elektromagnetische Wellen sind, und zwar bevorzugt im Frequenzbereich 1 kHz bis 10 GHz und besonders im Frequenzbereich von 10 MHz bis 1 GHz. Das erfindungsgemäße Verfahren ermöglicht eine einfache Herstellung von gezielt erzeugten, lokal leitfähigen Oberflächenbereichen an Bauteilen aus langstahlfasergefüllten Thermoplasten, die während der Entformung nach dem Spritzgießen noch während des eigentlichen Spritzgußprozesses oder im Verlaufe einer Nachbehandlung oder während eines Montageprozesses der Bauteile entstehen. Die definiert erzeugten Oberflächenstrukturen lassen sich durch geringen Energieaufwand abtragen. Der Negativdruck der Oberflächenstruktur wird durch flexible Werkzeugeinsätze im Spritzgußwerkzeug realisiert. Während des Spritzgießens bildet sich diese Struktur auf den Bauteilkomponenten an definierten Stellen ab. Vorteilhaft ist, daß durch das Vorliegen der Oberflächenstrukturen das Abtragen der faserarmen Randschicht nicht mehr durch eine gezielt gesteuerte Bewegung z. B. eines Schleif- oder Fräswerkzeugs erfolgen muß, vielmehr kann durch das erfindungsgemäße Verfahren die Oberflächenstruktur durch den Entformvorgang selbst, durch einfache mechanische Nachbearbeitung in einer Vorrichtung oder durch einen entsprechend konstruktiv modifizierten Fügepartner abgetragen werden.

Das erfindungsgemäße Verfahren wird nun anhand der Zeichnungen erläutert. In diesen sind:
Fig. 1 eine schematische Schnittansicht, die die Erzeugung einer Oberflächenstruktur eines Bauteils im Spritzguß unter Verwendung eines flexiblen Einsatzes im Spritzgußwerkzeug verdeutlicht,
Fig. 2 eine schematische Schnittansicht eines Bauteils und einer Schneidkante zum Trennen der faserarmen Randschicht des Bauteils aus langstahlfasergefüllten Thermoplasten und
Fig. 3 eine schematische Schnittansicht zweier Formteile, die die Herstellung und Trennung verdeutlicht.

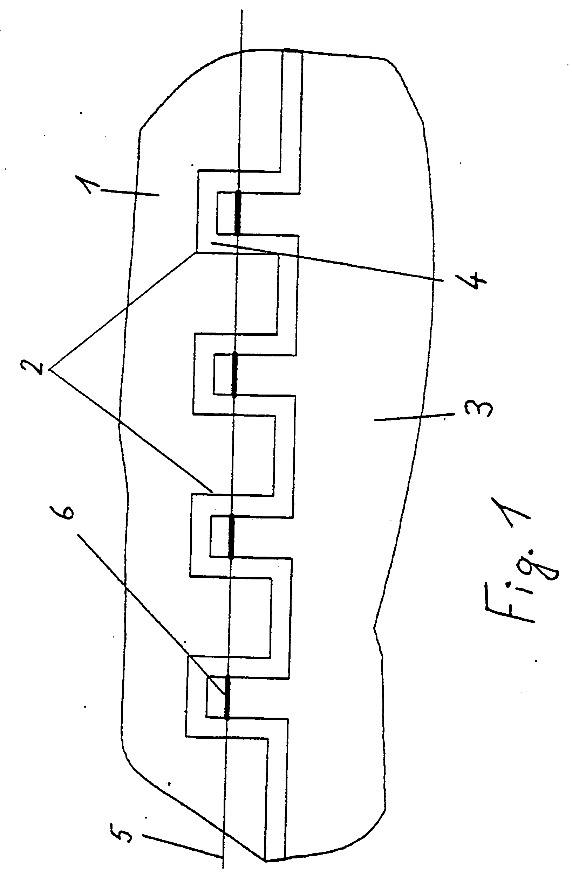

Wie aus Fig. 1 hervorgeht, wird während des Spritzgußverfahrens mittels eines flexiblen Einsatzes 1 im Spritzgußwerkzeug die definierte noppenartige Oberflächenstruktur 2 des Bauteils 3 mit elektrisch schlecht leitender faserarmen Randschicht 4 geschaffen, die nach dem unmittelbaren Spritzgießen noch während des Spritzgußprozesses beim Entformen des Bauteils 3 entlang der Trennebene 5 derart gezielt entfernt wird, daß an den Kontaktflächen 6 dabei lokal leitfähige Oberflächenbereiche des Bauteils 3 geschaffen werden.

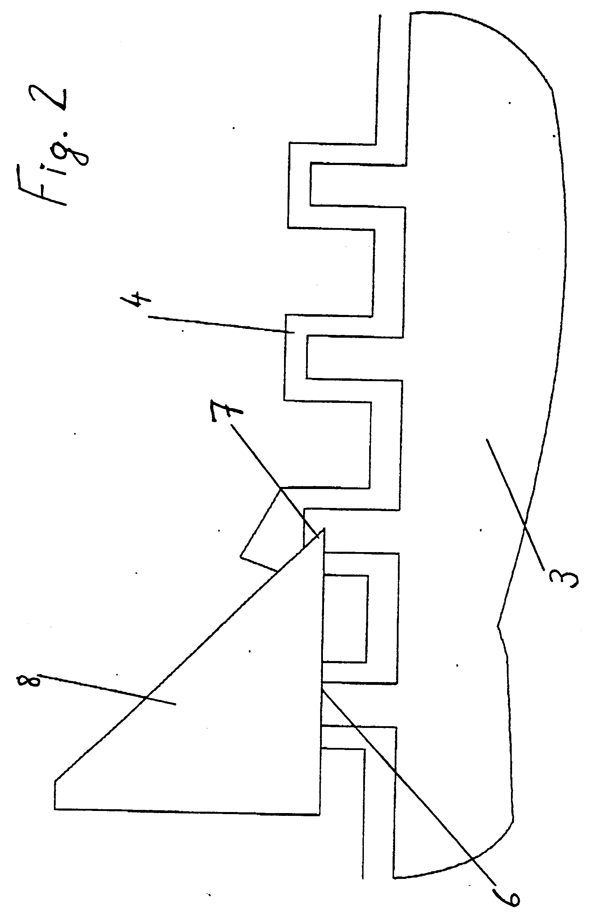

Fig. 2 verdeutlicht, daß die schlecht leitende faserarme Randschicht 4 des Bauteils 3 bei einer Nachbehandlung des Bauteils 3 mittels einer Schneidkante 7 einer Vorrichtung 8 entfernt werden kann, so daß die Kontaktflächen 6 bei der Nachbehandlung gezielt gebildet werden und dabei an letzteren lokal leitfähige Oberflächenbereiche geschaffen werden. Die Schneidkante 7 kann auch im Spritzgußwerkzeug oder am Fügepartner vorgesehen sein.

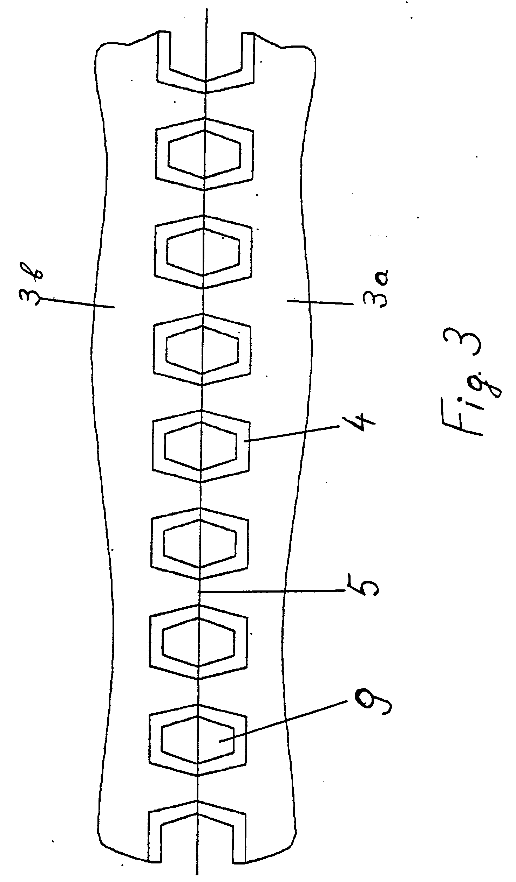

Fig. 3 verdeutlicht eine weitere Variante des Verfahrens zur Erzeugung niederohmiger Kontaktflächen durch Entfernen der schlecht leitenden faserarmen Randschicht der im Spritzguß hergestellten Bauteile 3.

Bei der Spritzgußfertigung von mindestens zwei Formteilen wie Gehäusehälften 3a, 3b bzw. Formteilen mit verlorenem Volumen (verlorenes Formnetz) sind die Gehäusehälften 3a und 3b an definierten Stellen in dem Spritzgußwerkzeug 9 miteinander verbunden, und die Erzeugung der elektrisch leitenden Kontaktflächen erfolgt nach dem Spritzgießen durch den Entformungsvorgang selbst. Das Fügen der Gehäusehälften kann durch nicht dargestellte lösbare Schnapp- und/oder Klipsverbindungen erfolgen. Um eine optimale leitende Verbindung über die Fuge zu erhalten, müssen die vorbereiteten Kontaktflächen unter Druck z. B. in Form einer Feder/Nut-Verbindung zusammengepreßt werden. Um eventuelle Unebenheiten in der Fügefläche auszugleichen, kann in herkömmlicher Weise zusätzlich eine leitfähige Dichtung eingelegt oder die Gehäusehälften durch einen leitfähigen Kleber verbunden werden.

## Patentansprüche

1. Verfahren zur Erzeugung niederohmiger Kontaktflächen (6) an eine faserarme Randschicht (4) aufweisenden, im Spritzgußverfahren hergestellten Bauteilen (3) aus fasergefüllten Thermoplasten, **dadurch gekennzeichnet,** daß Langstahlfasern als Fasern benutzt werden, beim Spritzgießen der Bauteile (3) diese mit Oberflächenstrukturen (2) versehen werden, die leicht abtragbar sind, und daß die faserarme Randschicht (4) gezielt unter Bildung der Kontaktflächen (6) entfernt wird und an letzteren dabei lokal leitende Oberflächenbereiche geschaffen werden.

2. Verfahren nach Anspruch 1, **dadurch gekennzeichnet,** daß die faserarme Randschicht (4) beim Entformen der Bauteile (3) noch während des Spritzgußprozesses entfernt wird.

3. Verfahren nach Anspruch 1, **dadurch gekennzeichnet,** daß die faserarme Randschicht (4) bei einer Nachbehandlung der Bauteile (3) entfernt wird

4. Verfahren nach Anspruch 1, **dadurch gekennzeichnet,** daß die faserarme Randschicht (4) der Bauteile (3) beim Fügen von Formteilen durch einen konstruktiv modifizierten Fügepartner entfernt wird.

5. Verfahren nach Anspruch 1, **dadurch gekennzeichnet,** daß beim Spritzgießen der Bauteile (3) die Oberflächenstrukturen (2) von Noppen gebildet werden, die mit Bruchkerben versehen werden.

6. Verfahren nach Anspruch 1, **dadurch gekennzeichnet,** daß beim Spritzgießen mindestens zwei Formteile mit verlorenem Volumen wie z.B. Gehäusehälften (3a, 3b) an definierten Stellen im Spritzwerkzeug verbunden und dann beim Entformen getrennt werden.

7. Verfahren nach Anspruch 4, **dadurch gekennzeichnet,** daß das gezielte Entfernen der faserarmen Randschicht (4) durch Zusammenpressen der Formteile mittels Druck beim Fügen letzterer erfolgt.

8. Verfahren nach Anspruch 7, **dadurch gekennzeichnet,** daß das Fügen mittels lösbarer Schnapp- oder Klipsverbindungen erfolgt.

9. Verfahren nach Anspruch 4, 7 und 8, **dadurch gekennzeichnet,** daß die vorbereiteten Formteile (3a, 3b) beim Fügen zusätzlich durch Einlegen einer leitfähigen Dichtung oder Verkleben mit leitfähigem Kleber verbunden werden.

10. Verfahren nach Anspruch 1 bis 9, **dadurch gekennzeichnet,** daß mindestens eine mit einer außerhalb der Bauteile (3) befindlichen Erdung verbindbare Kontaktfläche (6) geschaffen wird.

11. Verfahren nach Anspruch 1 bis 10, **dadurch gekennzeichnet,** daß das Versehen der Bauteile (3) mit den Oberflächenstrukturen (2) unter Verwendung mindestens eines flexiblen Einsatzes im Spritzgußwerkzeug erfolgt.

## Claims

1. Method for creating low ohmic contact areas (6) on thermoplastic articles filled with long steel fibres (3) having a marginal edge layer (4) with a few number of fibres (4) in an injection moulding process, characterized thereby that long steel fibres are used as fibres, that these are equipped with easily removable surface structures (2) during the injection moulding of the thermoplastic articles (3) and that the marginal edge layer (4) with a few number of fibres (4) is specifically removed by the formation of the contact surfaces (6) and that thereby locally conducting surface areas are created at the latter.

2. Method in accordance with claim 1, characterized thereby that the marginal layer (4) with a few number of fibres is already removed during the injection moulding process at the time of removing the thermoplastic articles (3) from the mould.

3. Method in accordance with claim 1, characterized thereby that the marginal layer (4) with a few number of fibres is removed during the after-treatment of the thermoplastic articles (3).

4. Method in accordance with claim 1, characterized thereby that the marginal layer (4) with a few number of fibres of the thermoplastic articles (3) is removed during the assembly of formed mould portions by means of an assembly-partner, the construction of which has been modified.

5. Method in accordance with claim 1, characterized thereby that the surface structures (2) are formed by nipples which are equipped with fractured notches.

6. Method in accordance with claim 1, characterized thereby that during the injection moulding at least two formed mould portions with lost volume as e.g. shell halves (3a, 3b) are connected at defined places in the injection moulding die and are then separated during the removal from the mould.

7. Method in accordance with claim 1, characterized thereby that the specific removal of the marginal layer (4) with a few number of fibres is made by pressing together the formed mould portions during the assembly of the latter.

8. Method in accordance with claim 7, characterized thereby that the assembly is accomplished by means of detachable snap or clip connections.

9. Method in accordance with claims 4, 7 and 8, characterized thereby that the prepared formed mould portions (3a, 3b) are additionally connected during their assembly by means of inserting a conductive joint or bonding with conductive adhesive.

10. Method in accordance with claims 1 to 9, characterized thereby that at least one contact area (6) is created which is connected to ground that is located outside the thermoplastic articles (3).

11. Method in accordance with claims 1 to 10, characterized thereby that the equipping of the thermoplastic articles (3) with the surface structures (2) is made by the use of at least one flexible inset in the injection moulding die.

## Revendications

1. Procédé pour la création de surfaces de contact en résistance ohmique basse (6) sur des pièces thermoplastiques chargées de fibres (3) présentant une couche marginale pauvre en fibres (4) et réalisées par moulage par injection, caractérisé par le fait que des fibres longues en acier sont utilisées, que lors du moulage par injection des pièces (3) celles-ci sont munies de structures superficielles (2) aminçables facilement et que la couche marginale (4) pauvre en fibres est enlevée en réalisant les surfaces de contact (6) et en créant sur ces dernières des secteurs de surface conducteurs locaux.

2. Procédé suivant revendication 1, caractérisé par le fait que la couche marginale (4) pauvre en fibres est enlevée lors de l'extraction des pièces (3) encore pendant le procédé de moulage par injection.

3. Procédé suivant revendication 1, caractérisé par le fait que la couche marginale (4) pauvre en fibres est enlevée lors d'un traitement subséquent des pièces (3).

4. Procédé suivant revendication 1, caractérisé par le fait que la couche marginale (4) pauvre en fibres des pièces est enlevée lors de l'assemblage des pièces moulées par un partenaire d'assemblage modifié constructivement.

5. Procédé suivant revendication 1, caractérisé par le fait que lors du moulage par injection des pièces (3) les structures superficielles (2) sont formées par des nopes munies de cassures.

6. Procédé suivant revendication 1, caractérisé par le fait que lors du moulage par injection au moins deux pièces moulées à volume perdu tel que moitiés de boîtier par exemple (3a, 3b) sont unies dans la moule à injection à des endroits définis et sont ensuite séparées lors de l'extraction.

7. Procédé suivant revendication 4, caractérisé par le fait que l'enlèvement adéquat de la couche marginale (4) pauvre en fibres est réalisé en resserrant les pièces moulées moyennant pression lors de l'assemblage de ces dernières.

8. Procédé suivant revendication 7, caractérisé par le fait que l'assemblage est réalisé moyennant des enclenchements ou déclics amovibles.

9. Procédé suivant revendications 4, 7 et 8, caractérisé par le fait que lors de l'assemblage les pièces moulées préparées (3a, 3b) sont liées additionnellement en introduisant un joint conducteur ou en les collant avec de la colle conductrice.

10. Procédé suivant revendications 1 à 9, caractérisé par le fait qu'au moins une surface de contact (6) est créée pouvant être liée à une mise à la terre située en-dehors des pièces (3).

11. Procédé suivant revendications 1 à 10, caractérisé par le fait que l'équipement des pièces (3) avec des structures superficielles (2) est réalisé en utilisant au moins une garniture flexible dans la moule à injection.
